# FASCICULE DE BREVET EUROPEEN

(11) **EP 1 223 379 B1**
(45) Date de publication et mention de la délivrance du brevet: **22.03.2006**
(21) Numéro de dépôt: 02364003.0
(22) Date de dépôt: 15.01.2002
(51) Int. Cl.: F22B 1/00, F24F 6/18, F24J 1/00

(54) **Générateur de vapeur destiné à humidifier l'air d'une enceinte ou l'air traité dans un système de conditionnement d'air**
Dampferzeuger zum Befeuchten von Luft in einem Raum oder in einer Klimaanlage
Steam generator for humidifying air in a room or in an air conditioning system

(30) Priorité: 16.01.2001 FR 0100505
(43) Date de publication de la demande: 17.07.2002
(73) Titulaire: L'Industrielle du Ponant SA, 29413 Landerneau Cédex (FR)
(72) Inventeur: Alix, Guy-Paul, 29200 Brest (FR); Lintanff, Stéphane, 29800 La Martyre (FR)
(74) Mandataire: Maillet, Alain

(56) Documents cités:
- WO-A-94/11682
- DE-A- 2 020 856
- FR-A- 2 643 140
- US-A- 3 486 332

## Description

La présente invention concerne un générateur de vapeur destiné à humidifier l'air d'une enceinte ou l'air traité dans un système de conditionnement d'air, en particulier un système de conditionnement d'air d'aéronef.

Pour humidifier l'air d'une enceinte, on peut y installer un générateur de vapeur. Classiquement un tel générateur de vapeur comprend un réservoir à eau qui est pourvu d'une ouverture et qui est associé à un moyen de chauffage constitué le plus souvent d'une résistance électrique. La mise sous tension de la résistance électrique chauffe l'eau puis la vaporise. La vapeur produite s'évacue par l'ouverture du réservoir et humidifie l'air de l'enceinte.

Ce réservoir peut également être raccordé, par l'intermédiaire d'une conduite terminée par un diffuseur, à une gaine de soufflage d'un système de conditionnement d'air. Une unité de commande peut aussi être associée au système de conditionnement d'air pour réguler la production de vapeur du générateur de vapeur dans la gaine de soufflage en agissant, en particulier, sur la tension électrique délivrée aux bornes de la résistance électrique pour obtenir un taux d'hygrométrie convenable dans l'enceinte où débouche la gaine de soufflage.

Une source de courant électrique telle qu'une batterie ou une génératrice électrique doit être utilisée pour alimenter en courant la résistance électrique du générateur de vapeur. Celui-ci ne peut donc être installé que dans un endroit raccordé à une source de courant électrique.

Par ailleurs, la masse de cette source de courant s'avère une contrainte lorsqu'il s'agit d'un système de conditionnement d'air embarqué dans un aéronef

On connaît également par le document US-A-3 486 332 un générateur de puissance pour torpille ou engin spatial qui est constitué d'un réacteur enveloppé, d'une part, par un réservoir contenant un oxydant et, d'autre part, par un réservoir contenant de l'oxygène agissant comme agent pressurisant de l'oxydant. Un réservoir contenant de l'eau ainsi qu'un système de pompage sont également associés au générateur de puissance. Le système de pompage permet de faire circuler de l'eau à l'intérieur du réacteur par l'intermédiaire de moyens, et d'injecter l'oxydant dans le réacteur au travers de buses de manière à ce qu'il puisse réagir avec un agent (du lithium) contenu dans le réacteur pour chauffer l'eau et produire ainsi de la vapeur. L'oxydant est du pentafluorure de brome ou du peroxyde d'oxygène. Les moyens pour faire circuler l'eau à l'intérieur du réacteur sont disposés à la périphérie du réacteur et sont alimentés par le réservoir par l'intermédiaire d'une canalisation. Lorsque la réaction dans le réacteur provoque la transformation de l'eau en vapeur, celle-ci circule sous pression dans une conduite centrale, raccordée aux moyens de circulation pour alimenter la turbine.

Le but de l'invention est donc de proposer un générateur de vapeur autonome destiné à humidifier l'air d'une enceinte ou l'air traité dans un système de conditionnement d'air, en particulier celui d'un aéronef, et dont le générateur de vapeur ne nécessite pas l'utilisation d'une source de courant électrique comme énergie de chauffage.

A cet effet, le générateur de vapeur de l'invention qui est destiné à humidifier l'air dans une enceinte ou l'air traité dans un système de conditionnement d'air, en particulier celui d'un aéronef, ledit générateur de vapeur comprenant au moins un réservoir destiné à contenir un fluide à base d'eau, ledit ou chaque réservoir étant raccordé à un échangeur de chaleur destiné à transformer le fluide en vapeur, est remarquable en ce que la source de chaleur associée à l'échangeur de chaleur est un réacteur thermochimique.

Ainsi, le générateur de vapeur peut fonctionner de façon autonome.

Selon l'invention, le réacteur thermochimique est constitué d'un premier réservoir destiné à contenir un agent réactif produisant une réaction exothermique lorsqu'il est combiné avec un autre agent réactif contenu dans un second réservoir, l'échangeur de chaleur comprenant une enveloppe dans laquelle est logé le premier réservoir.

Selon une autre caractéristique de l'invention, le premier réservoir est coaxial à l'enveloppe.

Selon une autre caractéristique de l'invention, le premier agent réactif est un composite de chlorure de calcium et de graphite naturel expansé et l'autre agent réactif est un gaz d'ammoniac.

Selon une autre caractéristique de l'invention, l'enveloppe est métallique.

Selon une autre caractéristique de l'invention, l'enveloppe comporte une ouverture raccordée à une bouche d'évacuation qui est destinée à permettre la diffusion de la vapeur.

Selon une autre caractéristique de l'invention, l'enveloppe comporte une ouverture raccordée à un conduit dont l'extrémité libre débouche dans une gaine d'un système de conditionnement d'air.

Selon une autre caractéristique de l'invention, l'extrémité libre du conduit est pourvue d'un diffuseur.

Selon une autre caractéristique de l'invention, l'enveloppe est pourvue d'un clapet de surpression destiné à permettre le maintien du fluide en pression de vapeur lors de sa vaporisation dans ladite enveloppe.

Selon une autre caractéristique de l'invention, le réservoir de fluide est raccordé, par l'intermédiaire d'une canalisation, à l'échangeur de chaleur, la canalisation étant pourvue d'une vanne permettant le réglage du débit du fluide vers l'échangeur de chaleur.

Selon une autre caractéristique, la ou les vanne(s) sont de type motorisée(s) et sont commandée(s) par une unité de commande permettant le réglage du débit de vapeur produit par le générateur de vapeur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en coupe d'un générateur de vapeur selon l'invention et,
la Fig. 2 représente une vue en coupe d'un générateur de vapeur raccordé à une gaine d'un système de conditionnement d'air selon l'invention.

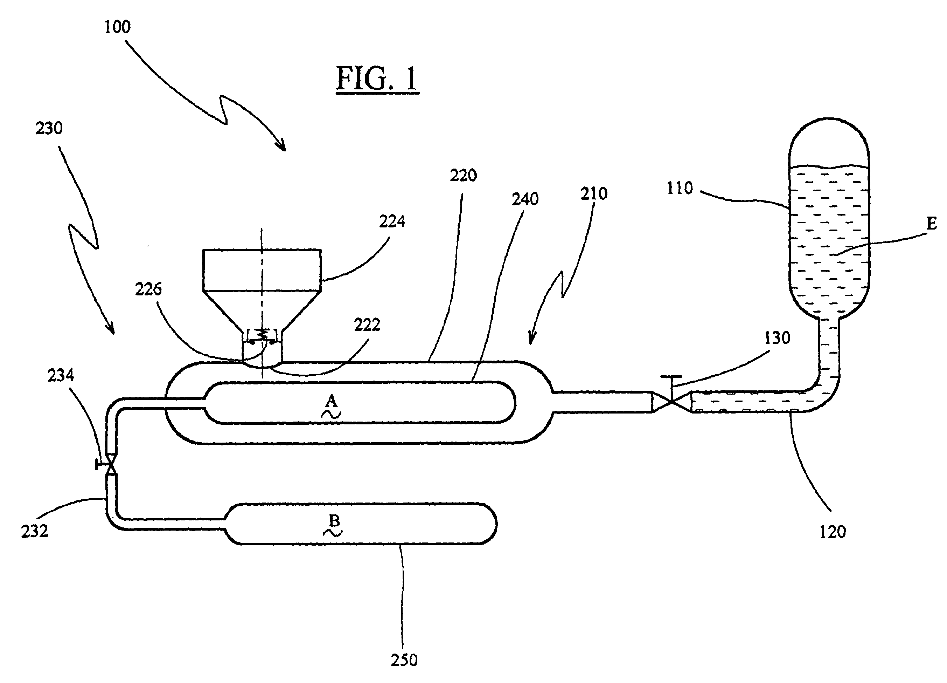

Le générateur de vapeur 100 représenté à la Fig. 1 est destiné à la production de vapeur pour humidifier l'air d'une enceinte à climatiser dans laquelle il est installé.

Le générateur de vapeur 100 est constitué notamment d'un réservoir 110 et d'un échangeur de chaleur 210.

Le réservoir 110 est destiné à contenir un fluide E à base d'eau. Il est raccordé en point bas, par l'intermédiaire d'une canalisation 120, à l'échangeur de chaleur 210 pour permettre l'écoulement du fluide E vers ledit échangeur de chaleur 210. Une vanne 130 est installée sur la canalisation 120 pour permettre le réglage du débit du fluide E vers l'échangeur de chaleur 210. Pour permettre l'écoulement du fluide E vers l'échangeur de chaleur 210, le réservoir 110 est disposé au-dessus dudit échangeur de chaleur 210 ou bien est pressurisé.

L'échangeur de chaleur 210 comprend une enveloppe 220, qui a une forme cylindrique à la Fig. 1. Cette enveloppe 220 a pour vocation de recevoir le fluide E afin qu'il puisse y être transformé en vapeur et être ainsi utilisé comme agent humidifiant. Cette enveloppe 220 est de type isotherme. Elle comporte également une ouverture 222 raccordée à une bouche d'évacuation 224 qui est destinée à permettre la diffusion de la vapeur produite par le générateur de vapeur 100 dans l'enceinte où il est installé. La bouche d'évacuation 224 ou l'ouverture 222 peuvent être pourvues, dans un mode de réalisation représenté à la Fig. 1, d'un clapet de surpression 226 qui est destiné à permettre le maintien du fluide E en pression de vapeur lors de sa vaporisation dans ladite enveloppe 220.

L'échangeur de chaleur 210 est associé à une source de chaleur qui, avantageusement, est un réacteur thermochimique 230. Ce réacteur thermochimique 230 est par exemple un réacteur de type solide/gaz pouvant fonctionner dans un mode réversible endothermique afin de permettre sa régénération.

Il comprend un premier réservoir 240 qui est associé à l'échangeur de chaleur 210 et un second réservoir 250 tous deux hermétiques.

Ce premier réservoir 240 présente de bonnes caractéristiques de conductibilité thermique. Il est de préférence métallique. Dans un mode de réalisation préféré, le premier réservoir 240 est logé à l'intérieur de l'enveloppe 220 et de préférence coaxialement à celle-ci. Ainsi, de cette manière, le fluide E peut être confiné entre l'enveloppe 220 et le premier réservoir 240. Celui-ci est destiné à contenir un agent réactif A, par exemple, un composite de chlorure de calcium et de graphite naturel expansé produisant une réaction exothermique lorsqu'il est combiné avec un autre agent réactif B, par exemple, un gaz d'ammoniac contenu dans le second réservoir 250. Pour mettre en présence l'agent réactif B avec l'agent réactif A contenu dans le premier réservoir 240, les deux réservoirs 240 et 250 sont raccordés par une canalisation 232 pourvue d'une vanne 234.

Dans un mode de réalisation non représenté, les vannes 130 et/ou 234 sont de type motorisées et sont commandées par une unité de commande permettant le réglage du débit de la vapeur produite par le générateur de vapeur 100.

Le générateur de vapeur 100 est installé dans l'enceinte à climatiser. Un fluide E à base d'eau est introduit dans le réservoir 110 et le réacteur thermochimique 230 est conditionné pour pouvoir fonctionner.

La vanne 130 est ouverte et réglée de manière à ce que le fluide E puisse s'écouler vers l'échangeur de chaleur 210 suivant un débit déterminé.

La vanne 234 est également ouverte et réglée de manière à permettre un débit calibré de l'agent réactif B contenu dans le second réservoir 250 vers le premier réservoir 240 pour réagir avec l'agent réactif A et produire ainsi une réaction chimique exothermique dans ledit premier réservoir 240. La température du premier réservoir s'élève alors pour devenir supérieure à la température d'ébullition du fluide E. Celui-ci s'évapore progressivement et s'évacue, au travers de l'ouverture 222, dans la bouche d'évacuation 224 qui diffuse ainsi la vapeur produite pour humidifier l'air de l'enceinte.

Le générateur de vapeur de l'invention peut fonctionner de façon autonome, sans qu'il soit nécessaire de le raccorder à une source de courant électrique comme énergie de chauffage.

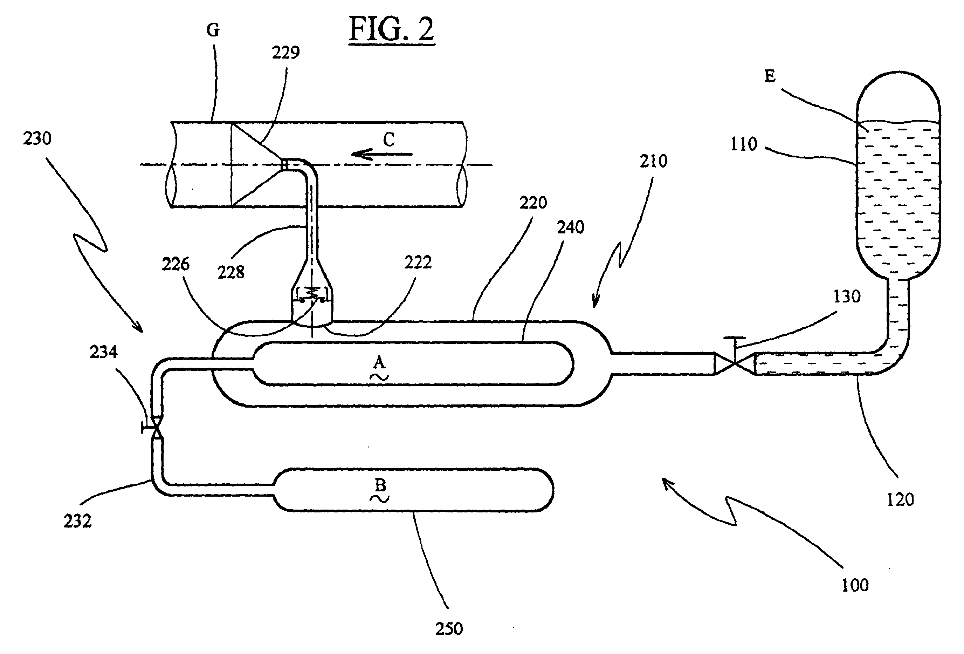

A la Fig. 2, est représentée une variante de réalisation d'un générateur de vapeur 100. Il est destiné à être raccordé à une gaine G d'un système de conditionnement d'air et en particulier un système de conditionnement d'air d'un aéronef. Un conduit 228 est raccordé à cet effet par une extrémité à l'ouverture 222 et débouche par son autre extrémité, pourvue d'un diffuseur 229, dans la gaine G. On remarquera que le diffuseur 229 est orienté dans une direction parallèle au sens d'écoulement de l'air dans ladite gaine G, indiquée par la flèche C à la Fig. 2.

Lors du fonctionnement du générateur de vapeur 100, le fluide E vaporisé est diffusé dans ladite gaine G.

Le conduit 228 peut également être pourvu d'un clapet de surpression 226.

## Revendications

1. Générateur de vapeur (100) destiné à humidifier l'air d'une enceinte ou l'air traité dans un système de conditionnement d'air, en particulier celui d'un aéronef, ledit générateur de vapeur (100) comprenant au moins un réservoir (110) destiné à contenir un fluide (E) à base d'eau, ledit ou chaque réservoir (110) étant raccordé à un échangeur de chaleur (210) destiné à transformer le fluide (E) en vapeur, la source de chaleur associée à l'échangeur de chaleur (210) étant un réacteur thermochimique (230), le réacteur thermochimique (230) étant constitué d'un premier réservoir (240) destiné à contenir un agent réactif (A) produisant une réaction exothermique lorsqu'il est combiné avec un autre agent réactif (B) contenu dans un second réservoir (250), **caractérisé en ce que** l'échangeur de chaleur (210) comprend une enveloppe (220) dans laquelle est logé le premier réservoir (240).

2. Générateur de vapeur (100) selon la revendication 1, **caractérisé en ce que** le premier réservoir (240) est coaxial à l'enveloppe (220).

3. Générateur de vapeur (100) selon la revendication 1 ou 2, **caractérisé en ce que** l'agent réactif (A) est un composite de chlorure de calcium et de graphite naturel expansé et l'agent réactif (B) est un gaz d'ammoniac.

4. Générateur de vapeur (100) selon l'une des revendications 1 à 3, **caractérisé en ce que** l'enveloppe (220) est métallique.

5. Générateur de vapeur (100) selon l'une des revendications 1 à 4, **caractérisé en ce que** l'enveloppe (220) comporte une ouverture (222) raccordée à une bouche d'évacuation (224) qui est destinée à permettre la diffusion de la vapeur.

6. Générateur de vapeur (100) selon l'une des revendications 1 à 4, **caractérisé en ce que** l'enveloppe (220) comporte une ouverture (222) raccordée à un conduit (228) dont l'extrémité libre débouche dans une gaine (G) d'un système de conditionnement d'air.

7. Générateur de vapeur (100) selon la revendication 6, **caractérisé en ce que** l'extrémité libre du conduit (228) est pourvue d'un diffuseur (229).

8. Générateur de vapeur (100) selon l'une des revendications 1 à 7, **caractérisé en ce que** l'enveloppe (220) est pourvue d'un clapet de surpression (226) destiné à permettre le maintien du fluide (E) en pression de vapeur lors de sa vaporisation dans ladite enveloppe (220).

9. **Générateur de vapeur** (100) selon l'une des revendications précédentes, **caractérisé en ce que** le réservoir (110) est raccordé, par l'intermédiaire d'une canalisation (120), à l'échangeur de chaleur (210), la canalisation étant pourvue d'une vanne (130) permettant le réglage du débit du fluide (E) vers l'échangeur de chaleur (210).

10. Générateur de vapeur (100) selon la revendication 9, **caractérisé en ce que** les vannes (130) et/ou (234) sont de type motorisées et sont commandées par une unité de commande permettant le réglage du débit de vapeur produit par le générateur de vapeur (100).

## Claims

1. Vapour generator (100) designed to humidify the air of an enclosure or the treated air in an air conditioning system, in particular that of an aircraft, said vapour generator (100) comprising at least one reservoir (110) designed to contain a water-based fluid (E), said or each reservoir (110) being connected to a heat exchanger (210) designed to convert the fluid (E) into vapour, the source of heat associated with the heat exchanger (210) being a thermochemical reactor (230), the thermochemical reactor (230) being constituted by a first reservoir (240) designed to contain a reagent (A) producing an exothermic reaction when it is combined with another reagent (B) contained in a second reservoir (250), **characterised in that** the heat exchanger (210) comprises a casing (220) in which the first reservoir (240) is housed.

2. Vapour generator (100) according to claim 1, **characterised in that** the first reservoir (240) is coaxial with the casing (220).

3. Vapour generator (100) according to claim 1 or 2, **characterised in that** the reagent (A) is a composite of calcium chloride and expanded natural graphite and the reagent (B) is an ammonia gas.

4. Vapour generator (100) according to one of claims 1 to 3, **characterised in that** the casing (220) is made of metal.

5. Vapour generator (100) according to one of claims 1 to 4, **characterised in that** the casing (220) comprises an opening (222) connected to a discharge outlet (224) which is designed to allow diffusion of the vapour.

6. Vapour generator (100) according to one of claims 1 to 4, **characterised in that** the casing (220) comprises an opening (222) connected to a pipe (228) the free end of which debouches into a duct (G) of an air conditioning system.

7. Vapour generator (100) according to claim 6, **characterised in that** the free end of the pipe (228) is provided with a diffuser (229).

8. Vapour generator (100) according to one of claims 1 to 7, **characterised in that** the casing (220) is provided with a pressure relief valve (226) designed to allow the fluid (E) to be maintained at vapour pressure when it is vaporized in said casing (220).

9. Vapour generator (100) according to one of the preceding claims, **characterised in that** the reservoir (110) is connected to the heat exchanger (210) through the intermediary of a pipe (120), the pipe being provided with a valve (130) allowing adjustment of the delivery of the fluid (E) to the heat exchanger (210).

10. Vapour generator (100) according to claim 9, **characterised in that** the valves (130) and/or (234) are of motor-operated type and are controlled by a control unit allowing adjustment of the vapour delivery produced by the vapour generator (100).

## Patentansprüche

1. Dampferzeuger (100) zum Befeuchten von Luft in einem Raum oder in einer Klimaanlage, insbesondere in einem Luftfahrzeug, wobei der Dampferzeuger (100) wenigstens einen Behälter (110) zur Aufnahme eines Fluids (E) auf der Basis von Wasser umfasst, wobei der oder jeder Behälter (110) an einen Wärmeaustauscher (21,0) angeschlossen ist, der das Fluid (E) in Dampf umwandelt, wobei die mit dem Wärmeaustauscher (210) verbundene Wärmequelle ein thermochemischer Reaktor (230) ist, welcher aus einem ersten Behälter (240) zur Aufnahme eines Reagenzmittels (A) besteht, welches eine exothermische Reaktion erzeugt, wenn es mit einem anderen Reagenzmittel (B) kombiniert wird, welches sich in einem zweiten Behälter (250) befindet, **dadurch gekennzeichnet, dass** der Wärmeaustauscher (210) von einem Gehäuse (220) umgeben ist, in welchem der erste Behälter (240) angeordnet ist.

2. Dampferzeuger (100) nach Anspruch 1, **dadurch gekenrizeich**net, dass der erste Behälter (240) koaxial zum Gehäuse (220) angeordnet ist.

3. Dampferzeuger (100) nach Anspruch 1 oder 2, **dadurch gekennzeichnet, dass** das Reagenzmittel (A) eine Zusammensetzung aus Kalziumchlorid und expandiertem Naturgraphit, und das Reagenzmittel (B) ein Ammoniakgas ist.

4. Dampferzeuger (100) nach einem der Ansprüche 1 bis 3, **dadurch gekennzeichnet, dass** das Gehäuse (220) aus Metall besteht.

5. Dampferzeuger (100) nach einem der Ansprüche 1 bis 4, **dadurch gekennzeichnet, dass** das Gehäuse (220) eine Öffnung (222) umfasst, die mit einer Entlüftungsklappe (224) zur Diffusion des Dampfes verbunden ist

6. Dampferzeuger (100) nach einem der Ansprüche 1 bis 4, **dadurch gekennzeichnet, dass** das Gehäuse (229) eine Öffnung (222) umfasst, die mit einem Leitungsrohr (228) verbunden ist, dessen freies Ende in eine Ummantelung (G) einer Klimaanlage einmündet.

7. Dampferzeuger (100) nach Anspruch 6, **dadurch gekennzeichnet, dass** das freie Ende des Leitungsrohrs (228) mit einem Diffusor (229) versehen ist.

8. Dampferzeuger (100) nach einem der Ansprüche 1 bis 7, **dadurch gekennzeichnet, dass** das Gehäuse (220) mit einem Überdruckklappe (226) versehen ist, welches dazu bestimmt ist, dass das Fluid (E) bei seiner Verdampfung in dem Gehäuse (220) unter Dampfdruck gehalten wird.

9. Dampferzeuger (100) nach einem der vorhergehenden Ansprüche, **dadurch gekennzeichnet, dass** der Behälter (110) über eine Rohrleitung (120) mit dem Wärmeaustauscher (210) verbunden ist, wobei die Rohrleitung mit einem Ventil (130) zur Regulierung der Fluidleistung (E) zum Wärmeaustauscher (210) versehen ist.

10. Dampferzeuger (100) nach Anspruch 9, **dadurch gekennzeichnet, dass** die Ventile (130) und/oder (234) motorisiert sind und von einer Steuereinheit gesteuert werden, welche die Regelung der vom Dampferzeuger (100) erzeugten Dampfleistung gestattet.
